# EUROPEAN PATENT APPLICATION

(11) **EP 4 296 223 A1**
(43) Date of publication of application: **27.12.2023**
(21) Application number: 22305916.3
(22) Date of filing: 24.06.2022
(51) Int. Cl.: C01B 21/08, C01B 32/90

(54) **SYNTHESIS OF TERNARY CARBIDE AND CARBONITRIDE MAX-PHASE PARTICLES WITH CONTROLLED DIMENSIONALITY**

(71) Applicant: Centre national de la recherche scientifique, 75016 Paris (FR); UNIVERSITE PAUL SABATIER TOULOUSE III, 31062 Toulouse Cedex 9 (FR)
(72) Inventor: SIMON, Patrice, 31500 Toulouse (FR); TABERNA, Pierre-Louis, 31750 Escalquens (FR); GOGOTSI, Yury, Ivyland, 18974 (US); SHAO, Hui, 31400 Toulouse (FR)
(74) Representative: Brevalex

(57) **Abstract**

A structured MAX-phase particle having the elementary formula Mₙ₊₁AXₙ (I), wherein "M" corresponds to at least one transition metal, "A" is an A-group element, "X" is C or CN, and "n" is equal to 1, 2, 3 or 4, wherein said MAX-phase structured particle has, at least partially, a defined shape.

## Description

### FIELD OF THE INVENTION

The invention relates to the field of structured MAX-phase particles and methods for preparing the same.

### BACKGROUND OF THE INVENTION

MAX-phases are a large family of materials with more than 150 different compositions that have been extensively investigated during the last 25 years. MAX-phases can be described with the "Mₙ₊₁AXₙ" general formula, where "M" corresponds to a transition metal, "A" is an A-group element, "X" is C and/or N, and "n" is equal to 1, 2, 3 or 4[1]. MAX-phases are mainly prepared from solid-state chemistry route, at synthesis temperatures T ≥ 1100°C (typically 1300°C - 1700°C) and higher, and is carried out under protective atmosphere to avoid the oxidation [1-7].These methods of synthesis thus requires a high input in energy.

They have a layered structure and a unique combination of properties, bridging the gap between metallic and ceramic materials [2]. Numerous applications are currently under study for MAX-phases, including replacement for graphite in high-temperature, applications, heating elements, high-temperature foil bearings, gas burner nozzles, tooling for dry drilling of concrete, ignition devices, and electrical contacts [1].

MAX-phases are also precursors for synthesis of 2-dimensional (2D) materials called MXenes. MXenes were discovered in 2010 in Gogotsi and Barsoum's group [3-6]. MXenes are 2-D metal carbides and nitrides, obtained by etching the A element from MAX precursors, leading to the formula Mₙ₊₁Xₙ. The outstanding properties of MXenes in terms of electrical conductivity, surface area, 2-D surface reactivity, etc. make MXenes attractive for a broad range of applications, ranging from energy storage (batteries, supercapacitors), electrocatalysis, to medical (photothermal therapy), communications (electromagnetic shielding), gas separation, water purification, and dialysis [7]. The rise of MXenes has boosted the interest in MAX synthesis, and the preparation of MXenes is today the main application of MAX-phases. Nontoxic and environmentally friendly titanium-based MXenes, built of abundant elements, and their hybrids and composites with polymers, ceramics, and metals are particularly attracting considerable attention [7]. MAX powders are commercially available from many manufacturers, including Millipore Sigma.

The properties of the MAX-phase and the associated MXene depend on the MAX composition, structure and morphology. For instance, it is well known that the properties of MXenes depend on their morphology: exfoliated multilayer MXenes composed of dozens of layers of Mₙ₊₁Xₙ have a low energy storage capacity compared with delaminated MXenes (single layers of Mₙ₊₁Xₙ). However, while the MAX-phase composition can be tuned by selecting the right ratio of precursors (M:X:A), there is today no synthesis methods of MAX-phases that allow for tuning and controlling the shape/morphology of the MAX at the nanoscale, due to the synthesis routes used today. For instance, bulk MAX-phase particles are mainly prepared using ceramic technology and grinding, with particle size > 1 µm, without any control on the morphology. The successful preparation of MAX-phases substrates with low dimensionality, for instance, 2-D (flakes) or 1-D (rods) would be a major achievement. These new structures would i) change the properties of MAX-phases thanks to smaller diffusion distance and electron confinement, higher surface area (...), and ii) allow the direct preparation of 2-D or 1-D MXenes from 2-D or 1-D MAX precursor, with improved properties.

### SUMMARY OF THE INVENTION

The object of this invention is to produce a MAX-phase, and/or MXene, particle having a controlled structure, in particular a controlled morphology and/or size, at the micro/nano scale and/or to achieve their synthesis with a moderate energy input such as at moderate temperatures (e.g., 1000°C or below). A further object of the invention is to provide a scalable method to produce, especially in bulk, the above mentioned particles, and in particular low-dimensional MAX-phases particles, including MAX-phase nanoflakes and MAX-phase nanorods, directly from metal powders and/or metal nitrides, eventually associated with carbon precursors. These particles are of course a further object of the invention.

At least one, and preferably all, of these objects are met by using selected carbon or carbon/nitrogen precursors. It was found that using such precursors having a particular shape and size, in a particular method of synthesis, would provide such a particle.

### DETAILED DESCRIPTION OF THE INVENTION

The present invention provides a method to obtain structured MAX-phase particles having the elementary formula Mₙ₊₁AXₙ (I), wherein "M" corresponds to a transition metal, "A" is an A-group element, "X" is C or CN, and "n" is equal to 1, 2, 3 or 4, said method comprising the steps of:
a) providing a mixture of M, A and a structured precursor comprising, consisting of, or consisting essentially of, C;
b) submitting said mixture to a heating step at a temperature ranging from 600°C to 1200°C, preferably from 700°C to 1100°C, even more preferably from 800°C to 1050°C, to obtain structured MAX-phase particles;
c) cooling said MAX-phase particles; and
d) eventually, washing said particles to remove impurities.

Preferably the structured precursor is chosen in the group consisting of carbon flakes, carbon rods, carbon fibres, carbon lattice rods, carbon tubes, graphene, reduced graphene oxide, single-wall carbon nanotubes, multi-wall carbon nanotubes and aggregates thereof. The use of graphene, in particular a reduced graphene oxide, and carbon nanotubes, in particular single wall nanotubes, is particularly preferred. The reduced graphene oxide is preferably an aerogel which may be obtained by freeze drying a graphene oxide hydrogel (obtained by heating an aqueous dispersion of graphene) and then submitting it to heat (e.g., up to 900°C) under an inert atmosphere to remove the oxygen group.

Referring to formula Mₙ₊₁AXₙ, M is in particular chosen in the group consisting of at least one of Sc, Ti, V, Cr, Zr, Nb, Mo, Hf and Ta, preferably Ti. Referring to formula Mₙ₊₁AXₙ, A is in particular chosen in the group consisting of at least one of Al, Si, P, S, Ga, Ge As, Cd, In, Sn, Ti, Pb and nitrides thereof; preferably Al or AIN.

The elements M and A and the structured precursor are usually in the shape of powders. Stoichiometric quantities of at least M and the structured precursor are advantageously used and the mixture of M, A and the structured precursor is preferably submitted to a milling process, e.g., by ball milling.

According to a particularly preferred aspect of the invention a salt is used and admixed to the mixture of M, A and the structured precursor before and/or during heating step b). It is further advantageous to premix the structured precursor and the (eutectic) salt together before adding the M and/or A elements. This premixing step can be carried out by ball milling (especially if the precursor is a flake or a sheet such as graphene) or by sonication (especially if the precursors are rods or tubes such as nanotubes). In this latter case, the sonication is carried in water and the mixture is dried (e.g., freeze-drying) before being mixed with M and/or A. The salt which is preferred is chosen in the group consisting of NaCl, KCl, LiCl, MgCl2, LiBr, NaBr, MgBr₂, KBr, CsCl, BaCl₂ and mixtures thereof. Eutectic mixtures such as such as NaCl and KCl, LiCl and KCl and CsCl and KCl, and BaCl2 and NaCl, are preferred. Alternatively, a salt, such as KBr, can be used on its own. A mixture of NaCl and KCl (in particular in a 1:1 in molar ratio) is particularly preferred.

A salt can be extensively used as an additive material to produce the MAX-phase particles of the invention and in particular to produce 1-D and 2-D MAX-phase particles. The advantage to use a salt in the synthesis is to 1) provide a better mixing of raw materials in order to increase homogeneity and 2) create a melt bath at the temperature of forming the MAX-phase in order to accelerate the diffusion rate of the M element.

The salt used to produce the particles of the invention and in particular the 1-D and 2-D MAX-phase is not limited to the mixture NaCl:KCl nor to chloride salts. Salts that would not decompose at 1100°C and 2) not react with the M, A and X and the targeted MAX-phase are considered. Various examples of salt and salt mixtures that can be used as additive materials are listed below in table 1.

**Table 1**

| Salt composition (mol.%) | Melting point Tₘ (°C) |
|---|---|
| NaCl | 801 |
| KCl | 770 |
| LiCl | 605 |
| MgCl₂ | 714 |
| LiBr | 550 |
| NaBr | 742 |
| MgBr₂ | 711 |
| KBr | 734 |
| NaCl(50)+KCl(50) | 657 |
| LiCl(60)+KCl(40) | 353 |
| CsCl(62.5)+KCl(37.5) | 616 |
| BaCl₂(40)+NaCl(60) | 651 |

The heating step, or the solid-state reaction step, is carried out at a temperature ranging from 600°C to 1200°C, preferably from 700°C to 1100°C, even more preferably from 800°C to 1050°C, to obtain structured MAX-phase particles. Using temperatures in the lower range is of course advantageous for cost and environmental reasons. Selecting a temperature of around 900°C ± 5% has shown to be particularly effective.

The heating step is preferably carried out under inert atmosphere, such as Ar. The dwell time can be chosen in the range of 1h to 12. Dwell times ranging from 3 to 10 hours are preferred. When a temperature of around 900°C ± 5% is selected, a dwell time of around 5.5 to 6.5 hour is preferred. The heating rate can be around 600°C/h. Once the solid-state reaction state has taken place, the mixture containing the MAX-phase particles of the invention can be let to cooled down at room temperature.

Especially when a salt is used, washing of the MAX-phase particles may be desirable. Such a washing step can be efficiently carried out using (deionized) water. Another suitable solvent of the salt used can also be considered. Additionally, or alternatively, the MAX-phase particles can be subjected to an acid, e.g., HCl in order to remove unreacted metal or intermetallic alloys' traces. The acid is then removed, for example using (deionized) water. Once the MAX-phase particles are washed and/or rinsed, they may be dried using commonly known technique such as gentle heat and/or vacuum.

The invention is of course also directed to a powder of structured MAX-phase particles and/or to a MAX-phase particle which is obtained or obtainable by the method of the invention. Due to their particular and unique structure such particles, or powder, display unique properties in the field of material or electrochemical field which will be uniquely attached to their method of manufacture.

A further object of the invention is a powder and/or a particle having the formula Mₙ₊₁AXₙ (I), wherein "M" corresponds to a transition metal, "A" is an A-group element, "X" is C or CN, preferably C , and "n" is equal to 1, 2, 3 or 4. The particle of the invention is "structured", that is, it has a shape which is not totally random and is, at least partially, of a given and recognisable shape. This shape can be chosen in the group consisting of flakes, sheets, plates, wafers, rods, fibres, wire, lattice rods, bundle, tubes, and arrays, networks, clusters or aggregates, thereof.

Advantageously, the particle of the invention is structured so that one of its three dimensions is substantially higher than at least one of the other. By dimension it is meant the dimensions of the long, intermediate, and short axes of the particle.

Advantageously, the particle of the invention is structured as a flake or aggregates of flakes. Such flake(s) may present two of its three dimensions which is substantially higher than the remaining one.

Alternatively, the particle of the invention may be structured as a rod or fibre or as networks, clusters or aggregates of rods or fibres. Such rod or fibre may present only one of its three dimensions which is substantially higher than the remaining two.

By "substantially higher" it is meant that the ratio of the highest dimension to the lowest dimension is at least 10, preferably at least 20, more preferably at least 50, even more preferably 100, and even more preferably at least 300.

According to a preferred aspect of the invention the size of the Max-phase particle, or the powder, of the invention is micrometric or smaller, that is the average size of the particle is less than 100 µm, preferably less than 50 µm.

It is further much preferred for the MAX-phase particles, or powders, of the invention to be :
- nanoparticles particles (particle size being less than 100 nm),
- particles having one dimension outside the nanoscale (one-dimensional nanomaterials (1D)), such as nanotubes, nanorods, nanofibers and nanowires; or
- particles having two dimensions outside the nanoscale. (two-dimensional nanomaterials (2D)) with sheet-like structures (nano flakes or nano plates) and transverse dimensions larger than 100 nm, while the thickness is within the nanoscale, typically less than 20 nm, preferably less than 5 nm.

It will be understood that when referring to a powder, the particle preferred size refers to mode values and can measure using Laser diffraction techniques.

To determine the size and the dimensions of these particles, known techniques are available to the skilled person, such as analysis form picture images using transmission electron microscopy (TEM), scanning electron microscopy (SEM) or Atomic Force Microscope (AFM). These technique could also be used to determine the size and dimension of a powder, especially a nanoscale powder.

Referring to formula Mₙ₊₁AXₙ, M is in particular chosen in the group consisting of at least one of Sc, Ti, V, Cr, Zr, Nb, Mo, Hf and Ta, preferably Ti.

Referring to formula Mₙ₊₁AXₙ, A is in particular chosen in the group consisting of at least one of Al, Si, P, S, Ga, Ge As, Cd, In, Sn, Ti, and Pb; preferably Al.

The MAX-phase particle, or powder, of the invention preferably has the following elementary formula: Ti₂CdC, Sc₂InC, Sc₂SnC,Ti₂AlC, Ti₃AlC₂, Ti₃AlCN, Ti₂GaC, Ti₂InC, Ti₂TlC, V₂AlC, V₂GaC, Cr₂GaC, Ti₂GeC, Ti₂SnC, Ti₂PbC, V₂GeC, Cr₂AlC, Cr₂GeC, V₂PC, V₂AsC, Ti₂SC, Zr₂InC, Zr₂TiC, Nb₂AlC, Nb₂GaC, Nb₂InC, Mo₂GaC, Zr₂SnC, Zr₂PbC, Nb₂SnC, Nb₂PC, Nb₂AsC, Zr₂SC, Nb₂SC, Hf₂InC, Hf₂TIC, Ta₂AIC, Ta₂GaC, Hf₂SnC, Hf₂PbC, Hf₂SC, Hf₂AlC, Hf₃AlC₂, Zr₂AlC, Ti₂ZnC, V₂ZnC, Nb₂CuC, Mn₂GaC, or Mo₂AuC .

The MAX-phase particle, or powder, of the invention preferably has the following elementary formula: Ti₃AlC₂, Ti₂AlC and Ti₃AlCN.

The MAX-phase particle, or powder, of the invention has preferably the following elementary formula: Ti₂AlC or Ti₃AlC₂.

A further object of the invention is a method to obtain structured MXene particles (e.g., MXene particle having the formula (II mentioned below), wherein the structured MAX-phase particles, or powder, of the invention are submitted to an acid treatment such as with hydrofluoric acid, preferably in an aqueous solution. Other acids such, NH₄HF₂, LiF in HCl, LiCl in HF or mixtures thereof can also be used.

A further object of the invention is a structured MXene particle having the formula (II) Mₙ₊₁XₙT, wherein "M" corresponds to at least one transition metal, "X" is C or CN, "T" is at least one surface termination groups defined by the synthesis (including, but not limited to, -O, -OH, - F, or -Cl,) "n" is equal to 1, 2, 3 or 4, wherein said structured MXene particle has, at least partially, a defined morphology and size as described above in respect of MAX-phase particle and/or is obtained, or obtainable, by the method of the invention. The nature of T group depends on the environment and chemicals used during the etching process. For instance, when aqueous LiF+HCl electrolyte is used to etch the A element of MAX phase to prepare MXene, T can be -O, -OH, -F, as the result of the surface oxidation of MXene. T groups are bound to surface M and potentially the X atoms.

Another object of the invention is the use of structured MAX-phase particles of the invention in the manufacture of graphite in high-temperature applications, heating elements, high-temperature foil bearings, gas burner nozzles, tooling for dry drilling of concrete, ignition devices, electrical contacts, or structured MXene particles.

Another object of the invention is the use of structured MAX-phase particles of the invention in the manufacture of energy storage devices (such as batteries, supercapacitors), electrocatalysis devices, medical devices ( such as for photothermal therapy), communication devices (e.g., for electromagnetic shielding), gas separation devices, water purification devices, and dialysis device.

Yet another object of the invention is the use of structure nano particles such as graphene sheet and nanotubes in the manufacture of MAX-phase and MXene particles.

### BRIEF DESCRIPTION OF THE DRAWINGS

The following figures are presented as illustrative, and should not be considered to limit the scope of the invention in any way.
**Figure 1****:** shows the XRD pattern of the MAX-phase nanoflakes synthesised in Example 1;
**Figure 2****:** shows SEM images of (a) rGO precursor and (b-d) MAX-phase nanoflakes of Example 1 at various magnifications;
**Figure 3****:** shows TEM and high resolution TEM images of 2D a MAX-phase nanoflake of Example 1;
**Figure 4****:** shows the chemical composition estimated by EDS analysis of MAX-phase nanoflakes of Example 1;
**Figure 5****:** shows the XRD pattern of Ti₃AlC₂ MAX-phase nanoflakes synthesised in Example 2;
**Figure 6****:** shows SEM images of the 2-D Ti₃AlC₂ MAX-phase nanoflakes of Example 2 at various magnifications;
**Figure 7****:** shows the XRD pattern of 1D Ti₂AlC MAX-phase nanorods synthesised in Example 3;
**Figure 8****:** shows the SEM images of (a) the SWCNT precursor and (b) and (c) the 1-D Ti₂AlC MAX-phase nanorods of Example 3;
**Figure 9****:** shows the TEM and high resolution TEM images of 1-D Ti₂AlC MAX-phase nanorods of Example 3;
**Figure 10****:** Shows the chemical composition estimated by EDS analysis of 1-D Ti₂AlC MAX-phase nanorods of Example 3;
**Figure 11****:** shows the XRD pattern of 1-D Ti₂AlC MAX-phase nanorods of example 4;
**Figure 12****:** shows SEM images of 1-D Ti₂AlC MAX-phase nanorods of Example 4 at various magnifications (a: 2 µ, b: 200nm);
**Figure 13****:** shows the chemical composition estimated by EDS analysis of 1-D Ti₂AlC MAX-phase nanorods of Example 4;
**Figure 14****:** shows the XRD pattern of 2-D Ti₂AlC MAX-phase nanoflakes of example 5;
**Figure 15****:** shows the SEM images of 2-D Ti₂AlCMAX-phase nanoflakes of example 5 at various magnifications (a: 5 µ, b: 20 µ, c: 500 nm);
**Figure 16****:** shows the chemical composition estimated by EDS analysis of 2-D Ti₂AlC MAX-phase nanoflakes of Example 5;
**Figure 17****:** shows the XRD pattern of Ti₂AlC MAX-phase precursor and Ti₂CTₓ MXene of example 6;
**Figure 18****:** shows the SEM and TEM images of Ti₂CTₓ MXene of example 6 at various magnifications ma (a: 1 µ, b: 200 nm, c: 20 nm).

### Example 1: Synthesis of 2-D Tiₙ₊₁AlCₙ -based MAX-phase nanoflakes at 1000°C

Ti metal powder (purity of 99.9%, -325 mesh), Al metal powder (purity of 99.9%, -325 mesh) and reduced graphene oxide (rGO, lab-made aerogels) are used as starting materials. The synthesis process is divided into three steps: 1) carbon precursor synthesis, 2) solid-state reaction followed by 3) post-reaction washing process.

### 1) Carbon precursor synthesis

The preparation of rGO precursor is detailed as follows. Graphene oxide (GO) aqueous dispersion was prepared by a modified Hummers method following published literature [8. Advanced Materials, 2019, 31(8): 1805075]. GO aqueous dispersion with a concentration of 2 g/L is then sealed in a hydrothermal kettle and heat it up to 160°C for 6 hours to form rGO hydrogels. rGO hydrogels were frozen by liquid nitrogen and then freeze-dried to get rGO aerogels. Afterward, rGO aerogels were put inside a tube furnace and heated up to 900°C and held for 60 mins under Ar atmosphere to further remove the oxygen groups of rGO. The heating rate was 600°C/h.

0.1 g 2-D rGO precursor and eutectic salt (NaCl:KCl =1:1 in molar ratio) were mixed in a 1:30 weight ratio. The mixture was milled for 1 h with mortar and pestle with the presence of ethanol. Ball mill mixing technique can be applied for upscaling the method. Then 0.797 g Ti metal powder was added into the mixture and milled for 10 minutes; 0.27 g Al metal powder was added into the mixture and milled for 10 mins. The molar ratio of Ti:AI:C is 2:1.2:1. The excess in Al is used to improve the purity of the MAX-phase. A ratio of 1 would lead to more TiC being formed. The mixture was then dried at 80°C under vacuum for 1 h. Then the mixture was put inside a corundum boat crucible and covered with 5 g of eutectic salt (NaCl: KCl =1:1 in molar ratio).

### 2) Solid-state reaction step

The crucible was placed inside of a tube furnace and heated up to 1000°C with a dwell time of 1 h under Ar atmosphere. The heating rate was 600°C/h. Then, the mixture was naturally cooled down to room temperature.

### 3) Post-reaction washing process step

The mixture was immersed in 200 ml deionized water for 30 mins to form an aqueous suspension. Then the suspension was vacuum-filtered and washed with deionized water three times to remove the residual salt. The obtained mixture was then added to 100 ml of 6M HCl and stirred for 6 h to complete cleaning and remove the unreacted metal or intermetallic alloys traces (i.e., intermetallics), such as TiAI. Then, the suspension was vacuum filtered and washed with deionized water three times to remove the residual acid. Finally, the obtained product was dried at 80°C under vacuum for at least 2 h before the material characterizations.

### Characterisations

X-ray diffraction analysis of 2-D MAX-phase nanoflakes was done using a D-8 diffractometer (Endeavor, Buker), with Cu-Ka radiation (40 kV, 25 mA). The XRD patterns were recorded from a 2 theta range of 7° to 80°, with a step size of 0.01° and collection time of 1 s per step. The microstructure and chemical compositions of 2-D MAX-phase nanoflakes and go precursor were analysed by scanning electron microscopy (SEM-FEG, JSM-7900F) at 5 kV with energy dispersive spectroscopy (EDS, BRUKER XFLASH 6-60) at 15 kV and transmission electron microscopy (TEM, JEM-2100F) at 200 kV.

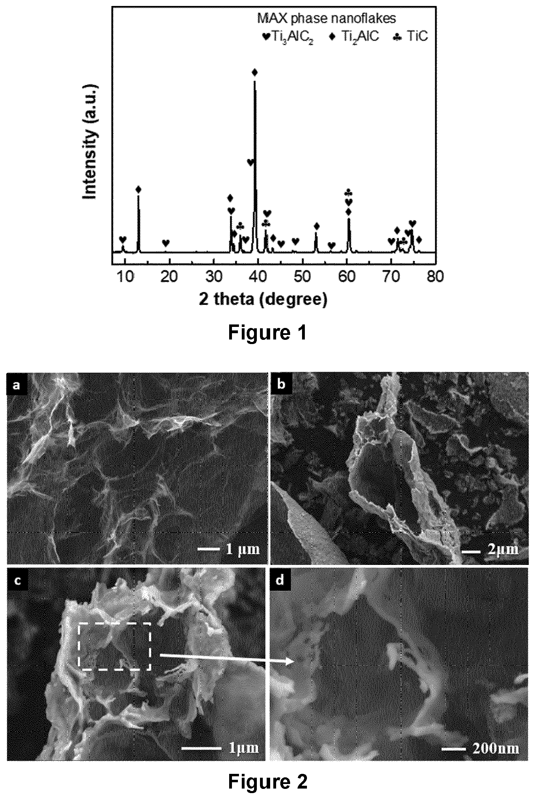

Fig.1 presents the XRD pattern of the as-prepared MAX-phase. A mix of Ti₃AlC₂ (312) and Ti₂AlC (211) phases was identified and confirmed the successful preparation of the MAX-phase. The 312 phase has a larger unit cell and longer diffusion length compared to 211 phase; thus, the formation of the 312 Ti₃AlC₂ phase generally required a higher temperature than for the 211 Ti₂AlC MAX-phase.

The crystallite size of 211 and 312 MAX-phases was estimated by using the Scherrer equation base on (002) peaks, 55 nm and 37 nm was obtained for 211 MAX-phase and 312 MAX-phase, respectively.

A higher temperature of 1300°C was required to form the Ti₃AlC₂ MAX-phase in previous solid-state reactions. In the present method, a noticeable amount of Ti₃AlC₂ MAX-phase was obtained at 1000°C. This highlights the importance of the selected 2-D carbon precursors, which significantly shorten the diffusion distance when forming MAX-phase. The presence of molten salt facilitates the transport of the reagent, enabling liquid-phase and interface transport of the reagents.

The ratio of 312 and 211 MAX-phase can be tuned by controlling the ratio of starting materials and the solid-state reaction time (see example 2). A small amount of Tic was also detected, which could be eliminated by extending the reaction time.

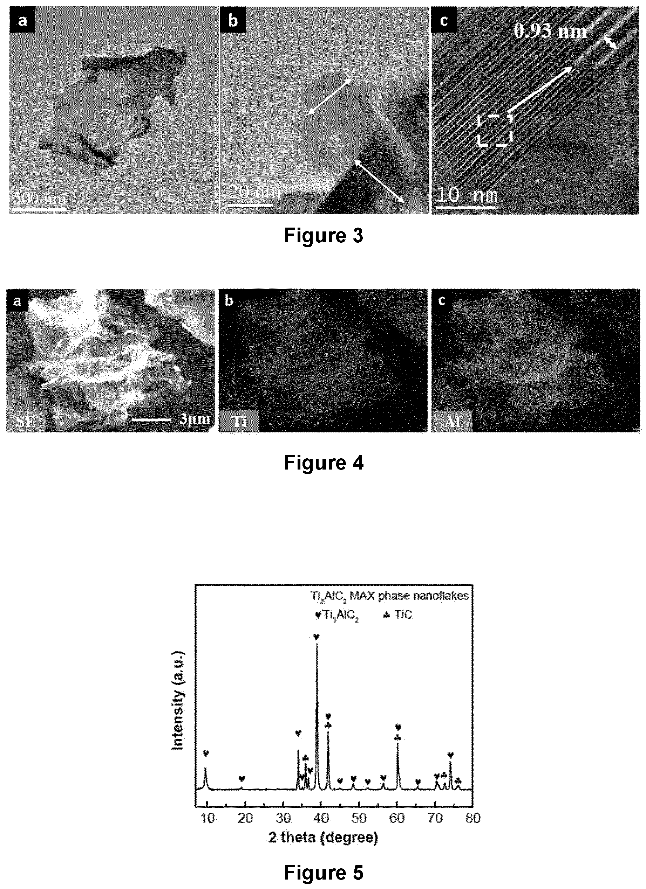

The morphology of synthesized rGO is presented in Fig. 2a. Thin carbon flakes were formed and used as carbon precursors for the MAX synthesis. The morphology and microstructure of obtained MAX-phase nanoflakes are shown in Fig. 2b and c, and Fig. 3a. A typical thin-flake morphology for the MAX-phase was observed. The morphology of 2-D rGO precursor was preserved to form the target MAX-phase. The length and width of these flakes are in the range of a few microns to tens of microns. Fig 2d shows a local magnification of Fig. 2c where the thickness of the MAX flakes lies in the range of a few tens of nanometers. This result is in line with the TEM (transmission electron microscope) analysis (Fig. 3b), where the thickness of a single MAX-phase (along (002) direction) particle was found to be around 30 nm. These results in line with the estimated crystallite size from the Scherrer equation. The lattice distance of the obtained MAX-phase particle is around 0.946 nm, which matches well the distance of (002) planes (Fig. 3c).

Fig. 4 presents the chemical composition of the MAX-phase flakes from EDS analysis. Homogenous distribution of Ti and Al elements further confirms the successful preparation of MAX-phase nanoflakes. The C element is not shown here due the background noise of carbon tape used in the SEM measurement.

In summary, 2-D MAX-phase nanoflakes were successfully produced by using a solid-state reaction route at 1000°C with 2-D rGO precursor as the carbon source. The obtained MAX-phase is a mixture of Ti₃AlC₂ (312) and Ti₂AlC (211) phases; the ratio of 312 and 211 MAX-phase is controlled by the synthesis time. The in-plane size of MAX-phase flakes is in the range from a few to tens of microns, with a thickness from a few to tens of nanometers.

### Example 2: Synthesis of 2-D Ti₃AlC₂ MAX-phase nanoflakes at 1000°C

Ti metal powder (purity of 99.9%, -325 mesh), Al metal powder (purity of 99.9%, -325 mesh) and reduced graphene oxide (rGO, lab-made aerogels) are used as starting materials.

### 1) Carbon precursor synthesis

The preparation of 2-D rGO precursor was generally as detailed in example 1. 0.025 g 2-D rGO precursor and eutectic salt (NaCl:KCl =1:1 in molar ratio) were mixed in a 1:30 weight ratio. The mixture was milled for 1 h with mortar and pestle with the presence of ethanol. Ball mill mixing technique can be applied for upscaling the method. Then 0.149 g Ti metal powder was added into the mixture and milled for 10 minutes; 0.034 g Al metal powder was added into the mixture and milled for 10 mins. The ratio of Ti:AI:C is 3:1.2:2 in molar. The mixture was then dried at 80°C under vacuum for 1 h. Then the mixture was put inside of corundum boat crucible and covered with 3 g of eutectic salt (NaCl:KCl =1:1 in molar ratio).

### 2) Solid-state reaction step

The crucible was placed inside of a tube furnace and heated up to 1000°C with a dwell time of 10 h under Ar atmosphere. The heating rate was 600°C/h. Then, the mixture was naturally cooled down to room temperature.

### 3) Post-reaction washing process step

The mixture was immersed in 100 ml deionized water for 30 mins to form an aqueous suspension. Then the suspension was vacuum-filtered and washed with deionized water three times to remove the residual salt. The obtained mixture was then added to 50 ml of 6M HCl and stirred for 6 h to complete cleaning and remove the unreacted metal or intermetallics. Then, the suspension was vacuum filtered and washed with deionized water three times to remove the residual acid. Finally, the obtained product was dried at 80°C under vacuum for at least 2 h before the material was analysed.

### Characterisations

X-ray diffraction analysis of 2-D MAX-phase nanoflakes was done using a D-8 diffractometer (Endeavor, Buker), with Cu-Ka radiation (40 kV, 25 mA). The XRD patterns were recorded from a 2 theta range of 7° to 80°, with a step size of 0.01° and collection time of 1 s per step. The microstructure and chemical compositions of 2-D MAX-phase nanoflakes and rGO precursor were analysed by scanning electron microscopy (SEM-FEG, JSM-7900F) at 5 kV with energy dispersive spectroscopy (EDS, BRUKER XFLASH 6-60) at 15 kV and transmission electron microscopy (TEM, JEM-2100F) at 200 kV.

Fig.5 presents the XRD pattern of the as-prepared MAX-phase. Ti₃AlC₂ (312) phase was identified and confirmed the successful preparation of the MAX-phase. In the present method, a temperature of 1000°C, lower than previously used temperatures, was used. This highlights the importance the selected 2-D carbon precursors, which significantly shorten the diffusion length during the solid-state reaction in forming MAX-phase. A small amount of TiC was also detected.

The crystallite size of the Ti₃AlC₂ MAX-phase nanoflakes was estimated to be 21 nm by using the Scherrer equation base on (002) peak.

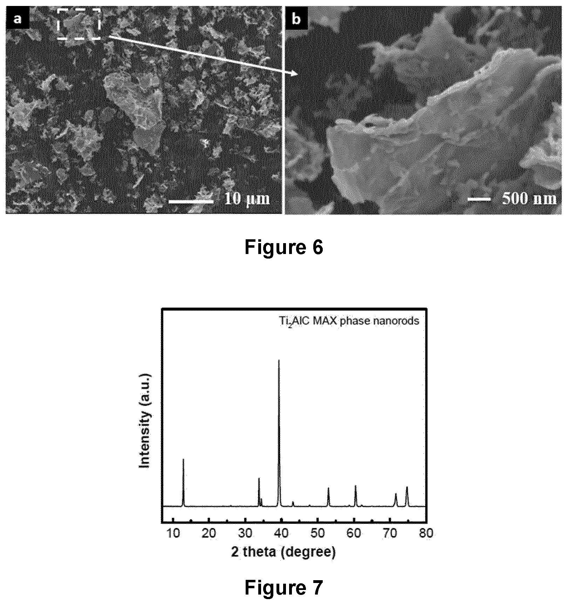

The morphology of synthesized rGO is shown in Fig. 2a. The morphology and microstructure of obtained MAX-phase nanoflakes are shown in Fig. 6a and 6b, a typical thin-flake morphology for the MAX-phase was observed. The morphology of 2D rGO precursor was preserved to form the target MAX-phase. The length and width of these flakes are in the range of a few microns to tens of microns.

In summary, 2-D Ti₃AlC₂ MAX-phase nanoflakes were successfully produced by using 2-D rGO precursor as the carbon source. A temperature of 1000°C was used to initiate the solid-state reaction in present invention, which was much lower compared to the previous solid-state reaction synthesis method (1300°C - 1700°C). The in-plane size of MAX-phase flakes is in the range from few to tens of microns, with a thickness of a few tens of nanometers.

### Example 3: Synthesis of 1-D Ti₂AlC MAX-phase nanorods at 1000°C

1-D Ti₂AlC MAX-phase nanorods are prepared using Ti metal powder (purity of 99.9%, -325 mesh), Al metal powder (purity of 99.9%, -325 mesh) and single-wall carbon nanotubes (SWCNT, TUBALL^{®} from the company OCSiAl Europe: OCSiAl Ltd, 207 Regent Street, London W1B 3HH, United Kingdom) as starting materials. The specification of these SWCNT are as follows:

| **Specifications** | **Unit of measure** | **Value** | **Method of evaluation** |
|---|---|---|---|
| Carbon content | wt.% | - 85 | TGA, EDX |
| CNT | wt.% | ~ 75 | TGA |
| Number of layers CNT | unit | 1 - 2 | TEM |
| Outer mean diameter | | | |
| CNT | nm | 1 - 3 | Raman, TEM |
| G/D ratio | unit | - 50 | Raman |
| Metal impurities | wt.% | ~ 15 | EDX, TGA |
| BET Surface Area | m²/g. | - 400 | BET |

### 1) Raw material preparation step

0.025 g 1-D SWNCT precursor and eutectic salt (NaCl:KCl =1:1 in molar ratio) were mixed in a 1:10 weight ratio. The mixture was immersed in 30 ml deionized water and probe-sonicated for 2 h. The suspension was then frozen by liquid nitrogen and then freeze-dried to get a SWCNT/salt mixture. Then, 0.199 g Ti metal powder and 0.068 g Al metal powder were added into the mixture and milled for 1 h with mortar and pestle in the presence of ethanol. Ball milling can be used for upscaling. The molar ratio of Ti:AI:C is 2:1.2:1. The mixture was then dried at 80°C under vacuum for 1 h. Then the mixture was placed in a corundum boat crucible and covered with 3 g of eutectic salt (NaCl:KCl =1:1 in molar ratio).

### 2) Solid-state reaction step

The crucible was placed inside of a tube furnace and heated up to 1000°C with a dwell time of 4 h under Ar atmosphere. The heating rate was 600°C/h. Then, the mixture was naturally cooled down to room temperature.

### 3) Post-reaction washing process step.

The mixture was immersed in 100 ml deionized water for 30 mins to form an aqueous suspension. Then the suspension was vacuum-filtered and washed with deionized water three times to remove the residual salt. The obtained mixture was then added to 50 ml of 6M HCl and stirred for 6 h to complete cleaning and remove the unreacted metal or intermetallics. Then, the suspension was vacuum filtered and washed with deionized water three times to remove the residual acid. Finally, the obtained product was dried at 80°C under vacuum for at least 2 h before the material was analysed.

### Characterisations

X-ray diffraction analysis of 1D MAX-phase nanorods was done using a D-8 diffractometer (Endeavor, Buker), with Cu-Ka radiation (40 kV, 25 mA). The XRD patterns were recorded from a 2 theta range of 7° to 80°, with a step size of 0.01° and collection time of 1 s per step. The microstructure and chemical compositions of 1D MAX-phase nanorods was analysed by scanning electron microscopy (SEM-FEG, JSM-7900F) at 5 kV with energy dispersive spectroscopy (EDS, BRUKER XFLASH 6-60) at 15 kV and transmission electron microscopy (TEM, JEM-2100F) at 200 kV.

Fig. 7 presents the XRD patterns for the obtained materials after the washing process. The Ti₂AlC (211) MAX-phase was identified and confirmed the successful preparation of the targeted MAX-phase. The crystallite size of the Ti₂AlC MAX-phase nanorods was estimated to be 55 nm by using the Scherrer equation base on (002) peak.

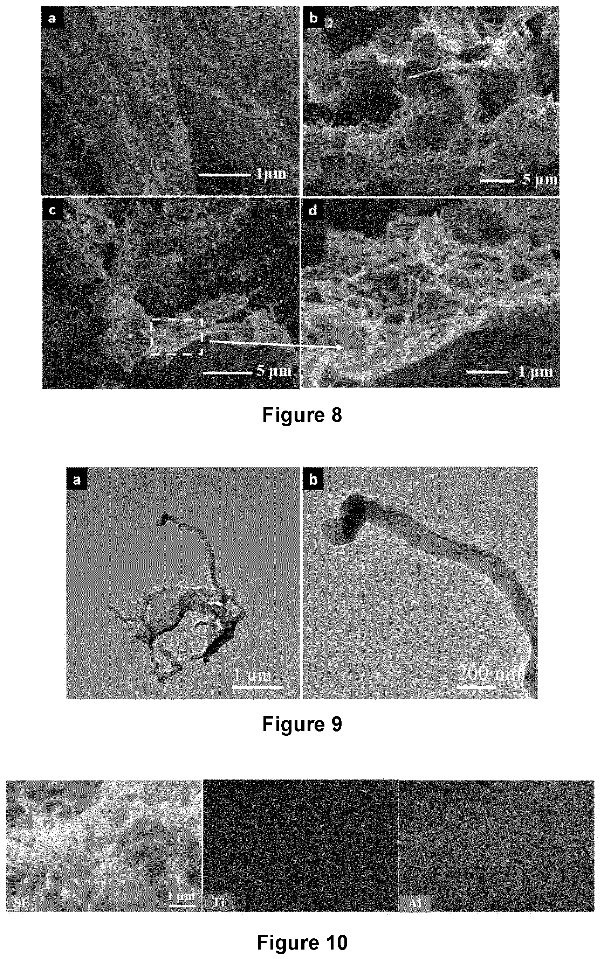

As shown in Fig. 8a, the typical morphology of SWCNT was observed. Fig.8 b and c present the morphology of the microstructure of obtained 1-D Ti₂AlC MAX-phase. The morphology of 1-D SWCNT precursor was preserved to form the target MAX-phase. Nanorods with length in the range of few to tens of microns and width in the range of a few tens to less than 200 nanometers are observed. This result is in line with the TEM analysis (Fig. 9 and b). These nanorods are aggregated to form MAX particles with a size of a few tens of microns; this is due to the aggregation of SWCNT precursors.

The chemical composition estimated by EDS is shown in Fig.10. Homogenous distribution of Ti and Al elements further confirms the successful preparation of MAX-phase nanorods. Tithe C element is not shown due the background noise of carbon tape used in the SEM measurement.

In summary, 1-D Ti₂AlC MAX-phase nanorods were successfully produced by using a solid-state reaction route at 1000°C with 1-D SWCNT precursor as the carbon source. The length of the nanorods is in the range from few to tens of microns, with a width in the range of a few tens to less than 200 nanometers.

### Example 4: Synthesis of 1D Ti₂AlC MAX-phase nanorods at 900°C

### 1) Raw material preparation step

The raw material preparation step of 1-D Ti₂AlC MAX-phase nanorods was identical to the one described in Example 3.

### 2) Solid-state reaction step

The crucible was placed inside of a tube furnace and heated up to 900°C with a dwell time of 6 h under Ar atmosphere. The heating rate was 600°C/h. Then, the mixture was naturally cooled down to room temperature.

### 3) Post-reaction washing process step.

The mixture was immersed in 100 ml deionized water for 30 mins to form an aqueous suspension. Then the suspension was vacuum-filtered and washed with deionized water three times to remove the residual salt. The obtained mixture was then added to 50 mL of 6M HCl and stirred for 6 h to complete cleaning and remove the unreacted metal or intermetallics. Then, the suspension was vacuum filtered and washed with deionized water three times to remove the residual acid. Finally, the obtained product was dried at 80°C under vacuum for at least 2 h before the material was analysed.

### Characterisations

X-ray diffraction analysis of 1D MAX-phase nanorods was done using a D-8 diffractometer (Endeavor, Buker), with Cu-Ka radiation (40 kV, 25 mA). The XRD patterns were recorded from a 2 theta range of 5° to 80°, with a step size of 0.01° and collection time of 1 s per step. The microstructure of 1D MAX-phase nanorods was analysed by scanning electron microscopy (SEM-FEG, JSM-7900F) at 5 kV with energy dispersive spectroscopy (EDS, BRUKER XFLASH 6-60) at 15 kV.

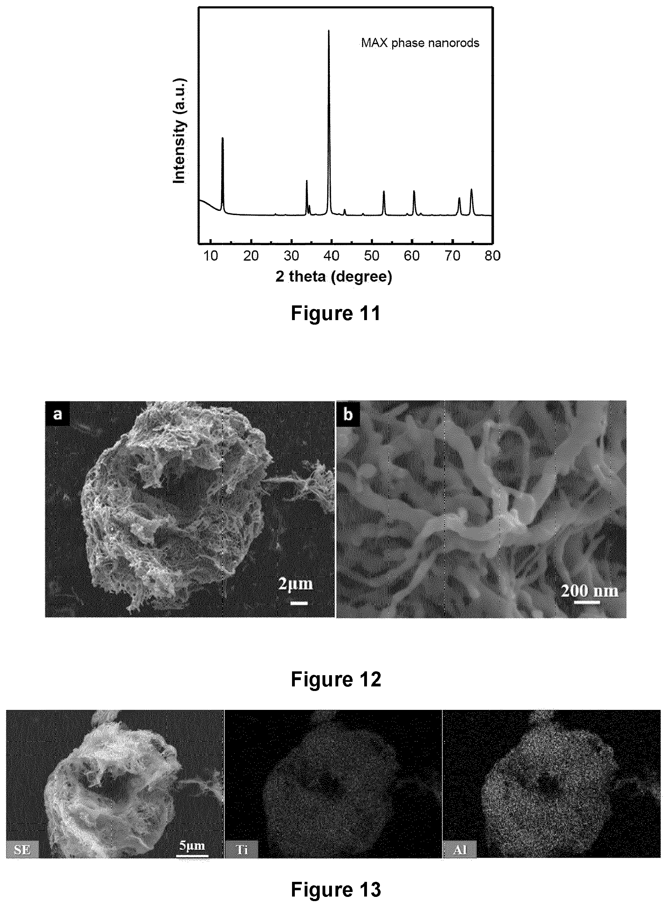

Fig. 11 presents the XRD patterns for the obtained materials after the washing process. The Ti₂AlC (211) MAX-phase was identified and confirmed the successful preparation of the targeted MAX-phase. The crystallite size of the Ti₂AlC MAX-phase nanorods was estimated to be 56 nm by using the Scherrer equation base on (002) peak.

Fig.12 a and b present the morphology of the microstructure of obtained 1-D Ti₂AlC MAX-phase. The morphology of 1-D SWCNT precursor was preserved to form the target MAX-phase. Nanorods with length in the range of few to tens of microns and width in the range of a few tens to less than 200 nanometers were observed.

The chemical composition estimated by EDS is shown in Fig.13. Homogenous distribution of Ti and Al elements further confirms the successful preparation of MAX-phase nanorods. Tithe C element is not shown due the background noise of carbon tape used in the SEM measurement.

In summary, 1-D Ti₂AlC MAX-phase nanorods were successfully produced by using a solid-state reaction route at 900°C with 1-D SWCNT precursor as the carbon source. A temperature of 900°C was used to initiate the solid-state reaction in present invention, which was much lower compared to the previous solid-state reaction synthesis method (typically, in the 1100-1700°C range). The length of the nanorods is in the range from few to tens of microns, with a width in the range of a few tens to less than 200 nanometers.

### Example 5: Synthesis of 2-D Ti₂AlC MAX-phase nanoflakes at 900°C

Ti metal powder (purity of 99.9%, -325 mesh), Al metal powder (purity of 99.9%, -325 mesh) and reduced graphene oxide (rGO, lab-made aerogels) are used as starting materials.

### 1) Carbon precursor synthesis

The preparation of 2-D rGO precursor was generally as detailed in example 2.

### 2) Solid-state reaction step

The crucible was placed inside of a tube furnace and heated up to 900°C with a dwell time of 6 h under Ar atmosphere. The heating rate was 600°C/h. Then, the mixture was naturally cooled down to room temperature.

### 3) Post-reaction washing process step

The mixture was immersed in 100 ml deionized water for 30 mins to form an aqueous suspension. Then the suspension was vacuum-filtered and washed with deionized water three times to remove the residual salt. The obtained mixture was then added to 50 ml of 6M HCl and stirred for 6 h to complete cleaning and remove the unreacted metal or intermetallics. Then, the suspension was vacuum filtered and washed with deionized water three times to remove the residual acid. Finally, the obtained product was dried at 80°C under vacuum for at least 2 h before the material was analysed.

### Characterisations

X-ray diffraction analysis of 2-D MAX-phase nanoflakes was done using a D-8 diffractometer (Endeavor, Buker), with Cu-Ka radiation (40 kV, 25 mA). The XRD patterns were recorded from a 2 theta range of 5° to 80°, with a step size of 0.01° and collection time of 1 s per step. The microstructure and chemical compositions of 2-D MAX-phase nanoflakes and rGO precursor were analysed by scanning electron microscopy (SEM-FEG, JSM-7900F) at 5 kV with energy dispersive spectroscopy (EDS, BRUKER XFLASH 6-60) at 15 kV.

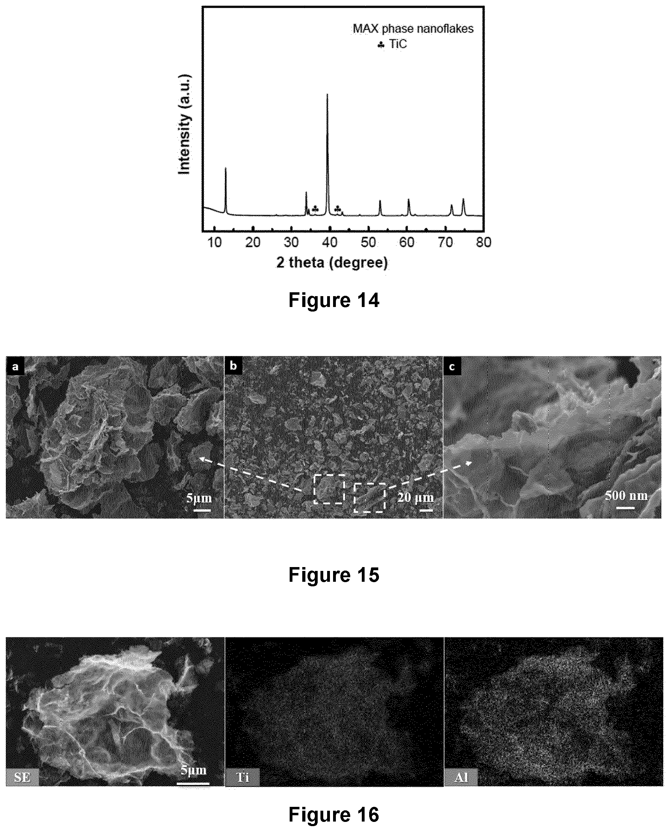

Fig.14 presents the XRD pattern of the as-prepared MAX-phase nanoflakes. Ti₂AlC (211) phase was identified and confirmed the successful preparation of the MAX-phase with the solid-state reaction temperature of 900°C. The crystallite size of the Ti₂AlC MAX-phase nanorods was estimated to be 57 nm by using the Scherrer equation base on (002) peak. A small amount of TiC was also detected.

The morphology of synthesized rGO is presented in Fig. 2a. The morphology and microstructure of obtained MAX-phase nanoflakes are shown in Fig. 15a, b and c, a typical thin-flake morphology for the MAX-phase was observed. The morphology of 2D rGO precursor was preserved to form the target MAX-phase. The length and width of these flakes are in the range of a few microns to tens of microns.

The chemical composition estimated by EDS is shown in Fig.16. Homogenous distribution of Ti and Al elements further confirms the successful preparation of MAX-phase nanoflakes. Tithe C element is not shown due the background noise of carbon tape used in the SEM measurement.

In summary, 2-D Ti₂AlC MAX-phase nanoflakes were successfully produced by using 2-D rGO precursor as the carbon source. A temperature of 900°C was used to initiate the solid-state reaction in present invention, which was much lower compared to the previous solid-state reaction synthesis method (1300°C - 1700°C). The in-plane size of MAX-phase flakes is in the range from few to tens of microns, with a thickness of a few tens of nanometers.

### Example 6: MXene prepared from 2-D Ti₂AlC MAX-phase nanoflakes

2-D Ti₂AlC MAX-phase nanoflakes from Example 5 was used as a precursor for preparing Ti₂CTₓ MXene by using an aqueous solution of hydrofluoric acid.

0.15 g Ti₂AlC MAX-phase precursor was added into 7.5 mL of etchant. The etchant was composed of 0.75 mL of concentrated HF (50 wt.%), 4.5 mL of concentrated HCl (37 wt.%) and 2.25 mL of deionized water. The mixed solution was stirred at a temperature of 35°C for 3 h. After the etching reaction took place, the product was washed with deionized water via repeated centrifugation for 4 minutes at 10000 r.p.m, until pH 6 was reached. Then, Ti₂CTₓ MXene suspension were frozen by liquid nitrogen and then freeze-dried to get MXene powders.

### Characterisations

X-ray diffraction analysis of Ti₂CTₓ MXene was done using a D-8 diffractometer (Endeavor, Buker), with Cu-Ka radiation (40 kV, 25 mA). The XRD patterns were recorded from a 2 theta range of 5° to 80°, with a step size of 0.016° and collection time of 0.13 s per step. The microstructure of Ti₂CTₓ MXene was analysed by scanning electron microscopy (SEM-FEG, JSM-7900F) at 5 kV and transmission electron microscopy (TEM, JEM-1400) at 200 kV.

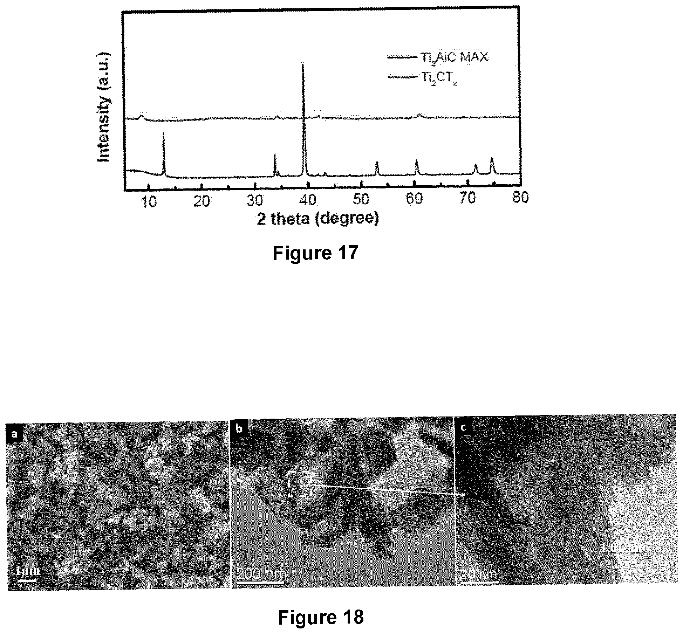

Fig. 17. provides the XRD patterns for the Ti₂AlC MAX precursor and the as-prepared Ti₂CTₓ MXene. Most of the diffraction peaks that belong to the MAX-phase disappeared after the reaction and (002) peak shifts to a low 2 theta angle, indicating the successfully preparation of Ti₂CTₓ MXene from 2-D Ti₂AlC MAX-phase nanoflakes.

The morphology of synthesized Ti₂CTₓ MXene is presented in Fig. 18a; after the etching reaction, the MAX flakes were broken down to smaller MXene particles. Fig. 18b and c give the microstructure of obtained Ti₂CTₓ MXene, where a typical MXene feature with interlayer distance of 1.01 nm was observed, further demonstrate the successfully preparation of Ti₂CTₓ MXene.

### Example 7: Proposed preparation method of 2-D Ti₃AlCN MAX phase nanoflakes at 1000 °C

Ti metal powder (purity of 99.9%, -325 mesh), Aluminium nitride (AIN) powder (purity of 99%, -325 mesh) and reduced graphene oxide (rGO, lab-made aerogels) are used as starting materials. The synthesis process is divided into three steps: 1) carbon precursor synthesis, 2) solid-state reaction followed by 3) post-reaction washing process.

### 1) Carbon precursor synthesis

The preparation of rGO precursor is detailed as follows. GO aqueous dispersion can be prepared by a modified Hummers method following published literature [Advanced Materials, 2019, 31(8): 1805075]. GO aqueous dispersion with a concentration of 2 g/L can be then sealed in a hydrothermal kettle and heat it up to 160 °C for 6 hours to form rGO hydrogels. rGo hydrogels will be frozen by liquid nitrogen and then freeze-dried to get rGO aerogels. Afterward, rGO aerogels will be put inside a tube furnace and heated up to 900 °C and hold for 30 mins under Ar atmosphere to remove the oxygen groups of rGO. The heating rate is 600 °C/h.

0.025 g 2-D rGO precursor and eutectic salt (NaCl:KCl =1:1 in molar ratio) will be mixed in a 1:30 weight ratio. The mixture will be milled for 1 h with mortar and pestle with the presence of ethanol. Note that ball mill mixing technique can be applied for mass production. Then 0.300 g Ti metal powder will be added to the mixture and mill for 10 minutes; 0.103 g AlN powder will be added into the mixture and mill for 10 mins. The ratio of Ti:AI:C:N is 3:1.2:1:1.2 in molar. The mixture will be then dried at 80 °C under vacuum for 1 h. Then the mixture will be put inside of corundum boat crucible and covered with 3 g of eutectic salt (NaCl:KCl =1:1 in molar ratio).

### 2) Solid-state reaction step

The crucible will be placed inside of a tube furnace and heated up to 1000 °C with a dwell time of 6 h under Ar atmosphere. The heating rate is 600 °C/h. Then, the mixture will be naturally cooled down to room temperature.

### 3) Post-reaction washing process step

The mixture will be immersed in 100 ml deionized water for 30 mins to form an aqueous suspension. Then the suspension will be vacuum-filtered and washed with deionized water three times to remove the residual salt. The final product will be 2-D Ti₃AlCN MAX phase nanoflakes.

### References

[1] Deysher, Grayson, et al. "Synthesis of Mo4VAlC4 MAX-phase and two-dimensional Mo4VC4 MXene with five atomic layers of transition metals." ACS nano 14.1 (2019): 204-217.
[2] Gonzalez-Julian, Jesus. "Processing of MAX-phases: From synthesis to applications." Journal of the American Ceramic Society 104.2 (2021): 659-690.
[3] U.S. Patent 9,193,595, M. Barsoum, Y. Gogotsi, M. N. Abdelmalak, O. Mashtalir, Compositions Comprising Free-Standing Two-Dimensional Crystals. PCT/US12/43273, WO Patent 2,012,177,712, filed June 20, 2012.
[4] U.S. Patent 9,415,011, M. Barsoum, Y. Gogotsi, M. N. Abdelmalak, O. Mashtalir, Compositions Comprising Free-Standing Two-Dimensional Crystals. Issued Aug. 16, 2012
[5] U.S. Patent 9,415,570, M. Barsoum, Y. Gogotsi, M. N. Abdelmalak, O. Mashtalir, Compositions Comprising Free-Standing Two-Dimensional Crystals. Issued Aug. 16, 2016
[6] U.S. Patent 9,837,182, M. Barsoum, Y. Gogotsi, M. N. Abdelmalak, O. Mashtalir, Compositions Comprising Free-Standing Two-Dimensional Crystals. Issued Dec. 5, 2017
[7] Vahid Mohammadi, Armin, Johanna Rosen, and Yury Gogotsi. "The world of two-dimensional carbides and nitrides (MXenes)." Science 372.6547 (2021).
[8] Chong Luo, Wei Lv, Changsheng Qi, Lixiang Zhong, Zheng-Ze Pan, Jia Li, Feiyu Kang, and Quan-Hong Yan Advanced Materials, 2019, 31(8): 1805075.

## Claims

1. A structured MAX-phase particle having the elementary formula Mₙ₊₁AXₙ (I), wherein "M" corresponds to at least one transition metal, "A" is an A-group element, "X" is C or CN, and "n" is equal to 1, 2, 3 or 4, wherein said MAX-phase structured particle has, at least partially, a defined shape.

2. The structured MAX-phase particle according to Claim 1, wherein said defined shape is chosen in the group consisting of flakes, rods, sheets, plates, fibres, wire, tubes, lattice rods, and aggregates thereof.

3. The structured MAX-phase particle according to Claim 1, wherein said particle have a size which is micrometric or smaller.

4. The structured MAX-phase particle according to Claim 3, wherein said particle is a nanoparticle; a 1D nanomaterial, such as a nanotubes, nanorods, nanofibers, nanowires or an aggregate thereof; or a 2D nanomaterial with a sheet-like structure such as a nanoflake, nanoplate or an aggregate thereof.

5. The structured MAX-phase particle according to any one of Claims 1 to 3, wherein said particle is preferably a flake, a rod, a rod-containing aggregates or a flake-containing aggregate.

6. The structured MAX-phase particle according to any one of Claims 1 to 5, wherein in formula (I), M is Ti and/or A is Al, and/or X is C.

7. The structured MAX-phase particle according to any one of Claims 1 to 6, wherein formula (I) is Ti₂AlC or Ti₃AlC₂.

8. A method to obtain structured MAX-phase particles having the elementary formula Mn+1AXn (I), wherein "M" corresponds to a transition metal, "A" is an A-group element, "X" is C or CN, and "n" is equal to 1, 2, 3 or 4, said method comprising the steps of:
a) providing a mixture of M, A and a structured precursor comprising, consisting of, or consisting essentially of, C;
b) submitting said mixture to a heating step at a temperature ranging from 600°C to 1200°C, preferably from 700°C to 1100°C, even more preferably from 800°C to 1050°C, to obtain structured MAX-phase particles;
c) cooling said MAX-phase particles; and
d) eventually, removing impurities.

9. The method according to Claim 8, wherein said structured precursor is chosen in the group consisting of carbon flakes, carbon rods, carbon fibres, carbon lattice rods, carbon tubes, graphene, reduced graphene oxide, single-wall carbon nanotubes, multi-wall carbon nanotubes and aggregates thereof.

10. The method according to any one of Claims 7 to 9, wherein said mixture is further admixed with a salt before and/or during being submitted to said heating step b).

11. The method according Claim 10, wherein said salt is chosen in the group consisting of NaCl, KCl, LiCl, MgCl₂, LiBr, NaBr, MgBr₂, KBr, CsCl, BaCl₂ and mixtures, such as NaCl and KCl, LiCl and KCl and CsCl and KCl, and BaCl₂ and NaCl, thereof.

12. The method according to claim 11, wherein said salt mixture is chosen in the group consisting of NaCl and KCl, preferably at 50/50 molar ratio, LiCl and KCl, preferably at 60/40 molar ratio, CsCl and KCl, preferably at a 62.5/37.5 molar ratio, and BaCl₂(40) and NaCl(60), preferably at a 40/60 molar ratio, mixtures.

13. A method to obtain structured MXene particles, wherein structured MAX-phase particles as described in any one of Claims 1 to 7, or obtained according to the method defined in any one of Claim 8 to 12, are submitted to an acid treatment, preferably by contact with HF, NH₄HF₂, LiF in HCl or LiCl in HF.

14. A structured MXene particle having the formula (II) Mₙ₊₁XₙT wherein "M" corresponds to at least one transition metal, "X" is C or CN, "T" are surface termination groups such as -O, -OH, -F, or -Cl, "n" is equal to 1, 2, 3 or 4, wherein said structured MXene particle has, at least partially, a defined shape and/or is obtained by the method of Claim 13.

15. The use of a structured MAX-phase particle as described in any one of Claims 1 to 7, or obtained according to the method defined in any one of Claims 8 to 12 in the manufacture of graphite for high-temperature applications, heating elements, high-temperature foil bearings, gas burner nozzles, tooling for dry drilling of concrete, ignition devices, electrical contacts, or structured MXene particles.
